# EUROPÄISCHE PATENTSCHRIFT

(11) **EP 3 622 488 B1**
(45) Veröffentlichungstag und Bekanntmachung des Hinweises auf die Patenterteilung: **01.01.2025**
(21) Anmeldenummer: 18723458.8
(22) Anmeldetag: 04.05.2018
(51) Int. Cl.: G07C 5/00

(54) **OBD ADAPTER**
OBD ADAPTER
ADAPTATEUR OBD

(30) Priorität: 08.05.2017 DE 102017109866
(43) Veröffentlichungstag der Anmeldung: 18.03.2020
(73) Patentinhaber: Webasto SE, 82131 Stockdorf (DE)
(72) Erfinder: THÜRMER, Daniel, 82131 Stockdorf (DE); SONNEK, Sebastian, 82131 Stockdorf (DE)
(74) Vertreter: Prüfer & Partner mbB Patentanwälte · Rechtsanwälte
(86) Internationale Anmeldenummer: PCT/EP2018/061558
(87) Internationale Veröffentlichungsnummer: WO 2018/206446

(56) Entgegenhaltungen:
- CN-U- 201 975 644
- US-A1- 2008 268 662
- US-A1- 2010 010 705
- US-A1- 2011 106 371
- US-A1- 2016 042 578
- US-A1- 2017 039 784

## Beschreibung

Die Erfindung betrifft ein System zum Auslesen von Fahrzeugdaten über einen Diagnoseanschluss eines Fahrzeugs, ein Fahrzeug mit einem solchen System und ein Verfahren zum Nachrüsten einer Klimaeinrichtung bei einem Fahrzeug.

Beim Nachrüsten einer Klimaeinrichtung, insbesondere einer Standheizung oder einem Zuheizer, müssen verschiedene Komponenten der Klimaeinrichtung nachträglich in einem Fahrzeug montiert und an verschiedene, bereits werksseitig eingebaute Komponenten des Fahrzeugs angeschlossen werden, wie beispielsweise an die Fahrzeugbatterie, den Kraftstofftank, ein Gebläse oder einen Gebläseschalter des Fahrzeugs. Insbesondere das Anschließen einer nachrüstbaren Klimaeinrichtung an die vorhandene Fahrzeugelektrik bzw. - elektronik ist kompliziert, aufwendig und fehleranfällig.

In modernen Fahrzeugen werden Bussysteme zur Kommunikation zwischen den verschiedenen Komponenten des Fahrzeugs eingesetzt. Häufig sind die Bussysteme eines Fahrzeugs sicherheitsrelevant und nicht ohne Weiteres für nachrüstbare Komponenten zugänglich. Einerseits sind von den Fahrzeugherstellern oft keine zusätzlichen Anschlüsse an vorhandenen Kommunikationssystemen vorgesehen. Andererseits sind möglicherweise vorhandene Anschlüsse spezifisch für einen bestimmten Fahrzeughersteller und nicht mit den Anschlüssen einer nachrüstbaren Klimaeinrichtung kompatibel. Innerhalb eines modernen Fahrzeugs ist eine große Menge an von Sensoren erfassten Fahrzeugdaten vorhanden, die sich auf Betriebszustände von Fahrzeugkomponenten oder -systemen oder auf von Sensoren erfasste Messgrößen beziehen. Diese Fahrzeugdaten werden von Steuergeräten innerhalb des Fahrzeugs über Bussysteme kommuniziert. Auch für die Steuerung einer nachrüstbaren Klimaeinrichtung sind diese Fahrzeugdaten von Interesse, beispielsweise um die Klimaeinrichtung möglichst wirkungsvoll und effizient, insbesondere in Abstimmung mit anderen Fahrzeugsystemen betreiben zu können.

Heute ist es beim Nachrüsten einer Klimaeinrichtung häufig notwendig vorhandene Kommunikationsleitungen aufzutrennen bzw. zu zerschneiden, um geeignete Anschlüsse für eine nachrüstbare Klimaeinrichtung einzusetzen, über die auf vorhandene Fahrzeugdaten zugegriffen werden kann. Solche Eingriffe bei der Nachrüstung können Fehlfunktionen in der bestehenden fahrzeuginternen Kommunikation verursachen, wenn sie nicht fachgerecht ausgeführt werden. Außerdem ist das Nachrüsten dadurch zeitaufwendig.

Fahrzeuge weisen typischerweise ein vorgeschriebenes und genormtes fahrzeuginternes Diagnosesystem auf, das oft als OBD (On-Board-Diagnose) bezeichnet wird. An einen standardgemäß vorgesehenen Diagnoseanschluss eines Fahrzeugs kann ein Diagnosegerät angeschlossen werden, um in einer Werkstatt eine Fehlerdiagnose für das Fahrzeug durchzuführen.

In der Druckschrift US 2008/268662 A1 ist ein Durchgangsstecker offenbart. Die US 2020/010705 A1 beschreibt eine Vorrichtung zum Überwachen von Fahrzeugdaten. Die US 2016/042578 A1 offenbart ein OBD II Diagnose-Splitterkabel und die US 2011/106731 A1 offenbart eine Schnittstelle für die Fahrzeugdiagnose, an die in geschützter Weise ein Kommunikationsbaustein mit einem drahtlosen Sendeempfänger angekoppelt ist.

Das Dokument CN 201975644U offenbart einen Adapter für ein On-Board-Diagnosesystem mit einem Ausgangsanschluss, der sich in der Größe vom Anschluss des On-Board-Diagnosesystems unterscheidet, so dass der Übertragungsweg die Fahrdaten des Fahrzeugs über den Eingangsanschluss zum Ausgangsanschluss überträgt.

Ausgehend von diesem Stand der Technik stellt sich die vorliegende Erfindung die Aufgabe, den Zugriff auf in einem Fahrzeug vorhandene Fahrzeugdaten einfacher, zuverlässiger und schneller zu ermöglichen. Insbesondere sollen vorhandene Fahrzeugdaten für die Steuerung einer nachrüstbaren Klimaeinrichtung bereitgestellt werden. Insbesondere soll der Zugriff auf vorhandene Fahrzeugdaten bei einer Vielzahl verschiedener Fahrzeugtypen und Fahrzeugen verschiedener Fahrzeughersteller möglichst universell gewährleistet sein.

Diese Aufgabe wird durch ein System gemäß Anspruch 1 gelöst.

Unter einem Diagnoseanschluss eines Fahrzeugs, insbesondere Kraftfahrzeugs, ist vorzugsweise ein genormter Anschluss, insbesondere ein genormter Steckverbinder, einer Diagnoseschnittstelle des Fahrzeugs zu verstehen. Insbesondere können über einen standardgemäß in Fahrzeugen vorhandenen Diagnoseanschluss Steuergeräte des Fahrzeugs oder ein Fehlerspeicher adressiert und von den Steuergeräten bzw. dem Fehlerspeicher bereitgestellte Fahrzeugdaten über den Diagnoseanschluss ausgelesen werden. Typischerweise werden die ausgelesenen Fahrzeugdaten von einem an den Diagnoseanschluss angeschlossenen Diagnosegerät für eine Fehlerdiagnose an dem Fahrzeug verwendet, beispielsweise während einer Inspektion des Fahrzeugs in einer Werkstatt.

Insbesondere ist die Gatewayeinrichtung dazu ausgebildet, Fahrzeugdaten zu empfangen und darauf basierend Steuerbefehle zur Steuerung einer Klimaeinrichtung, wie beispielsweise einer Standheizung oder eines Zuheizers, zu erzeugen. Das System kann zusätzlich Sensoren, insbesondere einen Temperatursensor zur Erfassung der Außentemperatur, umfassen, die Fahrzeugdaten erfassen und der Gatewayeinrichtung bereitstellen. Die Gatewayeinrichtung weist insbesondere einen geeigneten, insbesondere mehrpoligen Steckanschluss zur Verbindung mit einem Abzweigungssteckverbinder der Abzweigungsleitung des Steckeraufsatzes auf. Vorzugsweise ist die Gatewayeinrichtung dazu ausgebildet, eine über den Steckeraufsatz aus einem Diagnoseanschluss des Fahrzeugs ausgelesene PID (Parameter ID) als Datensatz zu empfangen und darin enthaltene Fahrzeugdaten zu interpretieren, vorzugsweise basierend auf dem OBD-2-Standard. Vorzugsweise liest das System mittels des Steckeraufsatzes mindestens eine Motordrehzahl, eine Kühlmitteltemperatur und/oder Zustandsdaten betreffend eine Stopp-Start-Funktion der Motorsteuerung über den Diagnoseanschluss des Fahrzeugs aus. Auch der Betriebszustand der Fahrzeugzündung kann von der Gatewayeinrichtung erfasst werden.

Eine Idee der Erfindung ist es, über einen Diagnoseanschluss eines Fahrzeugs auf vorhandene Fahrzeugdaten zuzugreifen und diese insbesondere zur Steuerung einer nachgerüsteten Klimaeinrichtung, vorzugsweise einer Standheizung oder einem Zuheizer, zu nutzen. Vorzugsweise bleibt der Steckeraufsatz während des Betriebs des Fahrzeugs dauerhaft mit dem Diagnoseanschluss des Fahrzeugs verbunden, insbesondere aufgesteckt. Auf diese Weise kann sowohl während des Betriebs, als auch während des Stillstands des Fahrzeugs auf Fahrzeugdaten zugegriffen werden, sobald diese innerhalb des Fahrzeugs verfügbar sind bzw. an dem Diagnoseanschluss bereitgestellt werden. Vom Diagnoseanschluss über die ersten Kontakte des Steckeraufsatzes übertragene Fahrzeugdaten können über eine oder mehrere Abzweigungsleitung/en an eine andere Stelle des Fahrzeugs übertragen werden, wo sie vorzugsweise zur Erzeugung von Steuerbefehlen für eine Klimaeinrichtung verwendbar sind. Das erfindungsgemäße System hat den Vorteil, dass ein Eingriff in bestehende Fahrzeug Kommunikationssysteme beim Nachrüsten einer Klimaeinrichtung nicht erforderlich ist, da Fahrzeuginformationen über einen Diagnoseanschluss des Fahrzeugs zur Verwendung in einer Gatewayeinrichtung zur Steuerung der Klimaeinrichtung ausgelesen werden können. Das System ist einfach, schnell und zuverlässig zu installieren. Es ist vielseitig einsetzbar und hat keine störenden Einflüsse auf bestehende Fahrzeugsysteme.

Insbesondere sind die ersten und zweiten Kontakte elektrisch leitend, vorzugsweise aus einem metallischen Material, und können erfindungsgemäß als Kontaktstellen verstanden werden. Insbesondere sind erste und zweite Kontakte jeweils gegeneinander elektrisch isoliert. Ein erster und ein zweiter Kontakt können jeweils an einem integralen Kontaktelement oder an separaten Kontaktelementen vorgesehen sein. Insbesondere ist eine Abzweigungsleitung mit einem ersten Kontakt elektrisch leitend verbunden, vorzugsweise verlötet oder festgeklemmt. Vorzugsweise ist für jeden ersten Kontakt, über den eine gewünschte Fahrzeuginformation übertragen werden soll, eine Abzweigungsleitung vorgesehen. Mehrere Abzweigungsleitungen können einzeln oder gemeinsam aus dem Steckerkörper herausgeführt, insbesondere von einer gemeinsamen Hülle umgeben oder miteinander verdrillt sein. Insbesondere ist die Abzweigungsleitung dazu ausgebildet Fahrzeugdaten zu übertragen.

Der Steckerkörper kann ein- oder mehrteilig aufgebaut sein und umfasst insbesondere ein Gehäuse, vorzugsweise aus Kunststoff. Vorzugsweise sind die Aufstiegsseite und die Anschlussseite sich gegenüberliegend angeordnet, könnten z. B. aber auch über Eck angeordnet sein. Der Körper hat insbesondere eine zylinderförmige, beispielsweise quaderförmige, Grundform. Die Aufsteckseite ist vorzugsweise zur Form des Diagnoseanschlusses passend ausgebildet, um im aufgesteckten Zustand neben einer elektrischen Verbindung über die ersten Kontakte insbesondere auch eine mechanische Verbindung zu gewährleisten, z.B. über eine kraft- und/oder formschlüssige Verklemmung. Es können zusätzliche Rast- oder Klemmelemente vorgesehen sein, um einen sicheren Sitz des Steckeraufsatzes auf dem Diagnoseanschluss zu gewährleisten. Vorzugsweise ist die Aufsteckseite als Gegenstück zum Diagnoseanschluss und die Anschlussseite gleich wie der Diagnoseanschluss geformt. Vorzugsweise haben die Ausstiegsseite und die Anschlussseite ein genormtes Steckerprofil.

Durch ein erfindungsgemäßes System mit einem Steckeraufsatz ist ein Eingriff in die fahrzeuginternen Kommunikationsleitungen für Fahrzeugdaten, beispielsweise Kabelbäume oder Datenbusse, nicht notwendig. Der Steckeraufsatz ist einfach, schnell und fehlerfrei an einem Diagnoseanschluss anzubringen. Ein Steckeraufsatz für einen Diagnoseanschluss hat den Vorteil, dass Diagnoseanschlüsse für Fahrzeuge typischerweise genormt sind und auf diese Weise derselbe Steckeraufsatz für eine Vielzahl verschiedener Fahrzeugtypen verwendet werden kann. Die Anschlussseite mit zweiten Kontakten ist vorzugsweise so ausgeführt, dass die Funktionalität des Diagnoseanschlusses auch bei aufgestecktem Steckeraufsatz erhalten bleibt. Insbesondere ist ein Diagnosegerät mittels eines aufgesteckten Steckeraufsatzes weiterhin an den Diagnoseanschluss anschließbar.

In einer vorteilhaften Weiterbildung der Erfindung ist mindestens ein erster Kontakt mit einem zugeordneten zweiten Kontakt elektrisch verbunden. Dadurch ist sichergestellt, dass ein über den ersten Kontakt übertragenes elektrisches Signal über den zugeordneten zweiten Kontakt abgegriffen werden kann, beispielsweise durch ein angeschlossenes Diagnosegerät. Es ist denkbar, nur einzelne erste Kontakte, insbesondere die für eine Fahrzeugdiagnose relevanten ersten Kontakte, mit einem zweiten Kontakt zu verbinden. Insbesondere sind eine Vielzahl der, vorzugsweise alle, ersten Kontakte mit einem jeweils zugeordneten zweiten Kontakt elektrisch verbunden. Dadurch sind alle an dem Diagnoseanschluss des Fahrzeugs abgreifbaren elektrischen Signale an der Anschlussseite des Steckeraufsatzes abgreifbar. Die ursprüngliche Funktion des Diagnoseanschlusses bleibt dadurch voll erhalten.

In einer vorteilhaften Weiterbildung der Erfindung sind bzw. ist die Aufsteckseite und/oder die Anschlussseite als ein OBD-2-Steckanschluss ausgebildet. Ein OBD-2- bzw. OBD-II-Steckeranschluss ist ein gemäß dem SAE-Standard J/1962 genormter 16-poliger Steckanschluss, der standardmäßig in vielen Fahrzeugen als Diagnoseanschluss eingebaut ist. Durch eine Gestaltung der Aufsteckseite als ein OBD-2-Steckeranschluss ist eine große Kompatibilität des erfindungsgemäßen Systems mit einem Steckeraufsatz mit vielen verschiedenen Fahrzeugtypen gewährleistet.

In einer Weiterbildung der Erfindung ist die Aufsteckseite als ein männlicher OBD-Steckanschluss, insbesondere zur Verbindung mit einer weiblichen OBD-Buchse eines Fahrzeugs und/oder die Anschlussseite als ein weiblicher OBD-Steckanschluss ausgebildet. Typischerweise ist der Diagnoseanschluss von Fahrzeugen als ein weiblicher OBD-Steckanschluss, insbesondere eine OBD-2-Buchse, gestaltet. Entsprechend haben Diagnosegeräte zum Anschließen an den Diagnoseanschluss des Fahrzeugs typischerweise einen männlichen OBD-Steckanschluss. Durch die Ausführung der Aufsteckseite als ein männlicher OBD-Steckanschluss, insbesondere als ein männlicher OBD-2-Steckanschluss, insbesondere mit Steckstiften als erste Kontakte, ist die Kompatibilität mit dem standardmäßig vorgesehenen Diagnoseanschluss des Fahrzeuges sichergestellt.

In einer Weiterbildung der Erfindung ist mindestens eine Abzweigungsleitung als eine, vorzugsweise bidirektionale, Kommunikationsleitung, insbesondere eine Datenbusleitung oder eine K-Leitung, ausgebildet. Insbesondere ist die Abzweigungsleitung als eine elektrische Leiterbahn, beispielsweise als ein Draht, ausgeführt, die an einem Ende mit einem ersten Kontakt innerhalb des Steckerkörpers verbunden ist und vorzugsweise an ihrem anderen Ende einen Anschlusskontakt bildet. Insbesondere ist die Abzweigungsleitung dazu ausgebildet, die über den mit ihr verbundenen ersten Kontakt übertragenen Fahrzeugdaten weiterzuleiten, insbesondere aus dem Steckerkörper herauszuleiten.

In einer Weiterbildung der Erfindung weist der Steckerkörper eine, vorzugsweise seitliche, Abzweigungsöffnung auf, durch die hindurch die mindestens eine Abzweigungsleitung aus dem Steckerkörper herausführt. Eine Abzweigungsöffnung ist insbesondere als eine Aussparung in einem Gehäuse des Steckerkörpers als Durchlass für die Abzweigungsleitung vorgesehen. Die Abzweigungsöffnung ist vorzugsweise in einer Seitenwand des Steckerkörpers vorgesehen, könnte aber auch an einer Stirnseite des Steckerkörpers angeordnet sein. Eine seitliche Anordnung hat den Vorteil, dass der Steckeraufsatz insgesamt flacher gestaltet werden kann, wenn die Abzweigungsleitung seitlich weggeführt wird.

In einer möglichen Ausführungsform ist ein Abzweigungsanschluss, insbesondere eine Steckerbuchse, in den Steckerkörper integriert, wobei die Abzweigungsleitung vorzugsweise nur innerhalb des Steckerkörpers verläuft und mit dem Abzweigungsanschluss verbunden ist. In diesem Fall wäre eine separate, an den Abzweigungsanschluss anschließbare, Leitung vorzusehen, um Fahrzeugdaten von dem Steckeraufsatz zu einer anderen Stelle des Fahrzeugs zu leiten.

In einer Weiterbildung der Erfindung ist die Abzweigungsleitung, vorzugsweise endseitig, mit einem Abzweigungssteckverbinder verbunden, wobei insbesondere mehrere, vorzugsweise alle, Abzweigungsleitungen mit einem gemeinsamen Abzweigungssteckverbinder verbunden sind. Die Abzweigungsleitung könnte aber auch als eine Y-Verbindung ausgebildet sein, wobei jeweils endseitig ein Abzweigungssteckverbinder vorgesehen sein kann. Ein Abzweigungsteckverbinder könnte ein beliebiger, vorzugsweise genormter, Steckverbinder sein, der insbesondere zum Anschluss an eine Gatewayeinrichtung geeignet ist. Insbesondere ist der Abzweigungsteckverbinder mehrpolig, beispielsweise 16-polig oder 12-polig ausgebildet, ist vorzugsweise aber kein genormter OBD-Steckverbinder, insbesondere kein OBD-2-Steckverbinder. Vorzugsweise weist der Abzweigungssteckverbinder eine geringere Anzahl von Polen auf als es der Anzahl der ersten Kontakte, insbesondere der Anzahl der Pole des Diagnoseanschlusses des Fahrzeugs, entspricht. Insbesondere weicht die Belegung der Pins des Abzweigungssteckers von der Belegung der Pins des Diagnoseanschlusses ab. Durch einen Abzweigungssteckverbinder sind die Abzweigungsleitungen einfach und zuverlässig anschließbar, beispielsweise an eine Gatewayeinrichtung.

In einer Weiterbildung der Erfindung hat der Steckerkörper eine Höhe von weniger als 70 mm, vorzugsweise von weniger als 60 mm, weiter vorzugsweise von weniger als 50 mm, weiter vorzugsweise von weniger als 40 mm, weiter vorzugsweise von weniger als 30 mm, weiter vorzugsweise von weniger als 20 mm, weiter vorzugsweise von weniger als 10 mm. Durch eine möglichst flache Bauweise des Steckerkörpers ist der Steckeraufsatz platzsparend an den Diagnoseanschluss eines Fahrzeugs aufsteckbar. Ein flacher Steckeraufsatz passt vorzugsweise hinter eine Verblendung die den Diagnoseanschluss des Fahrzeugs im Fahrzeuginnenraum typischerweise verdeckt.

In einer Weiterbildung der Erfindung ist eine erste Abzweigungsleitung mit einem ersten Kontakt verbunden, der im eingesteckten Zustand des Steckeraufsatzes mit einer ersten Datenbusleitung eines Fahrzeugs, insbesondere dem Anschluss 6 eines OBD-2 Steckanschlusses, in Kontakt ist, und ist eine zweite Abzweigungsleitung mit einem ersten Kontakt verbunden, der im eingesteckten Zustand des Steckeraufsatzes mit einer zweiten Datenbusleitung eines Fahrzeugs, insbesondere dem Anschluss 14 eines OBD-2 Steckanschlusses, in Kontakt ist. Eine erste und zweite Datenbusleitung eines Fahrzeugs sind beispielsweise die sogenannten Leitungen CAN High bzw. CAN Low eines CAN-Bussystems (Controller Area Network), die z.B. bei einer standardgemäßen Belegung eines OBD-2-Steckanschlusses auf den Steckstiften bzw. Pins 6 und 14 liegen. Eine Abzweigungsleitung könnte aber auch eine einzige Datenbusleitung, beispielsweise eine K-Leitung sein, mit der z.B. der Anschluss 7 eines OBD-2-Steckanschlusses belegt ist. Es können Datenbusleitungen verschiedener fahrzeuginterner Bussysteme, z.B. eines LIN-Bus, CAN-Bus oder FlexRay-Bus, als Abzweigungsleitungen vorgesehen sein, sofern diese Bussysteme mit dem Diagnoseanschluss des Fahrzeugs verbunden sind.

In einer Weiterbildung der Erfindung umfasst die Gatewayeinrichtung eine Datenspeichereinrichtung, die dazu ausgebildet ist, über den Diagnoseanschluss ausgelesene Fahrzeugdaten, insbesondere deren zeitlichen Verlauf, aufzuzeichnen, vorzugsweise um die Fahrzeugdaten zu einem späteren Zeitpunkt bereitzustellen. Insbesondere zeichnet die Datenspeichereinrichtung eine zeitliche Abfolge von Fahrzeugdaten, beispielsweise eines über den Diagnoseanschluss ausgelesenen Temperatur-, Druck-, Beschleunigungs- und/oder Geschwindigkeits- und/oder Zustandswerts, auf. Insbesondere werden die ausgelesenen Fahrzeugdaten in einer Datenbank als Vergangenheitswerte, bzw. historische Werte (engl.: historian database), gespeichert. Vorzugsweise werden die gespeicherten Fahrzeugdaten der Gatewayeinrichtung bedarfsweise zur Erzeugung von Steuerbefehlen bereitgestellt, insbesondere aus der Datenspeichereinrichtung ausgelesen, insbesondere für die Fälle, dass ein Zugriff auf momentane Fahrzeugdaten über den Diagnoseanschluss nicht möglich ist oder die benötigten Fahrzeugdaten auf einem fahrzeuginternen Bussystem gerade nicht kommuniziert werden und somit momentan über den Diagnoseanschluss nicht auslesbar sind. Die Gatewayeinrichtung kann zur Erzeugung von Steuerbefehlen dann auf in der Datenspeichereinrichtung gespeicherte Fahrzeugdaten zurückgreifen.

Erfindungsgemäß, umfasst das System außerdem ein Steuergerät für eine Klimaeinrichtung des Fahrzeugs, wobei die Gatewayeinrichtung über einen Datenbus mit dem Steuergerät kommunikativ verbunden ist. Das Steuergerät ist vorzugsweise einem Heizgerät der Klimaeinrichtung zugeordnet, der aber auch einer zur Kühlung geeigneten Komponente zugeordnet sein. Das Steuergerät ist beispielsweise über einen proprietären Bus, z.B. einen W-Bus, oder einen LIN-Bus mit der Gatewayeinrichtung verbunden. Das Steuergerät ist insbesondere insofern in seiner Funktionalität beschränkt, als es vorzugsweise dazu ausgebildet ist, Steuerbefehle von der Gatewayeinrichtung zu empfangen und z.B. in analoge Signale zur Ansteuerung eines Heizgeräts umzuwandeln. Die Gatewayeinrichtung weist insbesondere mindestens eine Busanbindung, insbesondere einen Buscontroller und eine Sende-/Empfangseinheit (Transceiver) auf. Die Gatewayeinrichtung ist insbesondere zur Kommunikation mit einer Bedieneinrichtung für die Klimaeinrichtung ausgebildet, beispielsweise einem Smartphone, einer Vorwahluhr, einem Temperaturregler, einer Fernbedienung oder einem Boardcomputer, insbesondere über eine Datenbusleitung, beispielsweise einen W-Bus, und/oder über eine Funkverbindung. Optional kann die Gatewayeinrichtung auch direkt an ein bestehendes Fahrzeugbussystem angebunden sein.

Außerdem wird die genannte Aufgabe durch ein Fahrzeug gemäß Anspruch 13 gelöst, insbesondere durch ein Fahrzeug, das ein erfindungsgemäßes System umfasst.

Weiterhin wird die genannte Aufgabe durch ein Verfahren gemäß Anspruch 13 gelöst.

Das erfindungsgemäße Verfahren hat ähnliche Vorteile, wie sie bereits in Verbindung mit dem erfindungsgemäßen System beschrieben wurden. Das Verfahren kann außerdem einige oder alle verfahrenstechnischen Merkmale umsetzen, die im Zusammenhang mit dem Steckeraufsatz und dem System beschrieben sind. Unter dem Verbinden des Diagnoseanschlusses mit der Klimaeinrichtung kann ein unmittelbares oder ein mittelbares Verbinden verstanden werden. Bei einem mittelbaren Verbinden kann insbesondere eine (intelligente) Gatewayeinrichtung zwischengeschaltet sein.

In einer vorteilhaften Weiterbildung des erfindungsgemäßen Verfahrens sind außerdem folgende Schritte vorgesehen:
- Verbinden des Diagnoseanschlusses mit der Gatewayeinrichtung in einem ersten Verbindungsschritt, insbesondere mittels der Abzweigungsleitung eines auf den des Diagnoseanschluss aufgesteckten Steckeraufsatzes,
- Verbinden der Gatewayeinrichtung mit der Klimaeinrichtung, insbesondere mit einem Steuergerät der Klimaeinrichtung, über einen Datenbus in einem zweiten Verbindungsschritt.

Die Reihenfolge der Verfahrensschritte ist vertauschbar. Der genannte erste und zweite Verfahrensschritt betreffend ein Verbinden der Gatewayeinrichtung stellen insbesondere Teilschritte des Verbindens des Diagnoseanschlusses des Fahrzeugs mit der Klimaeinrichtung dar. Es ist aber grundsätzlich auch denkbar, den Diagnoseanschluss ohne eine zwischengeordnete Gatewayeinrichtung direkt mit dem Steuergerät der Klimaeinrichtung zu verbinden. Die über die Diagnosestelle ausgelesenen Fahrzeugdaten könnten dann von dem entsprechend dafür ausgebildeten Steuergerät der Klimaeinrichtung direkt zur Steuerung verwendet werden. Ein Steuergerät ist insbesondere insofern in seiner Funktionalität beschränkt, als es vorzugsweise dazu ausgebildet ist, Steuerbefehle von der Gatewayeinrichtung zu empfangen und z.B. in analoge Signale zur Ansteuerung eines Heizgeräts umzuwandeln.

Ausführungsbeispiele der Erfindung werden nachfolgend anhand der Zeichnungen näher beschrieben. Hierbei zeigen:
- Figur 1A: eine schematische Darstellung einer Ausführungsform des Steckeraufsatzes eines erfindungsgemäßen Systems in einer perspektivischen Ansicht;
- Figur 1B: eine schematische Darstellung der Ausführungsform des Steckeraufsatzes nach Figur 1A in einer Vorderansicht;
- Figur 1C: eine schematische Darstellung der Ausführungsform des Steckeraufsatzes nach Figur 1A in einer Rückansicht;
- Figur 1D: eine schematische Darstellung der Ausführungsform des Steckeraufsatzes nach Figur 1A in einer Draufsicht;
- Figur 2: eine schematische Darstellung einer Ausführungsform eines erfindungsgemäßen Systems mit einem Steckeraufsatz nach den Figuren 1A bis 1D;
- Figur 3: eine schematische Darstellung einer Ausführungsform eines erfindungsgemäßen Fahrzeugs mit einem System nach Figur 2.

In der nachfolgenden Beschreibung der Erfindung werden für gleiche und gleich wirkende Elemente dieselben Bezugszeichen verwendet.

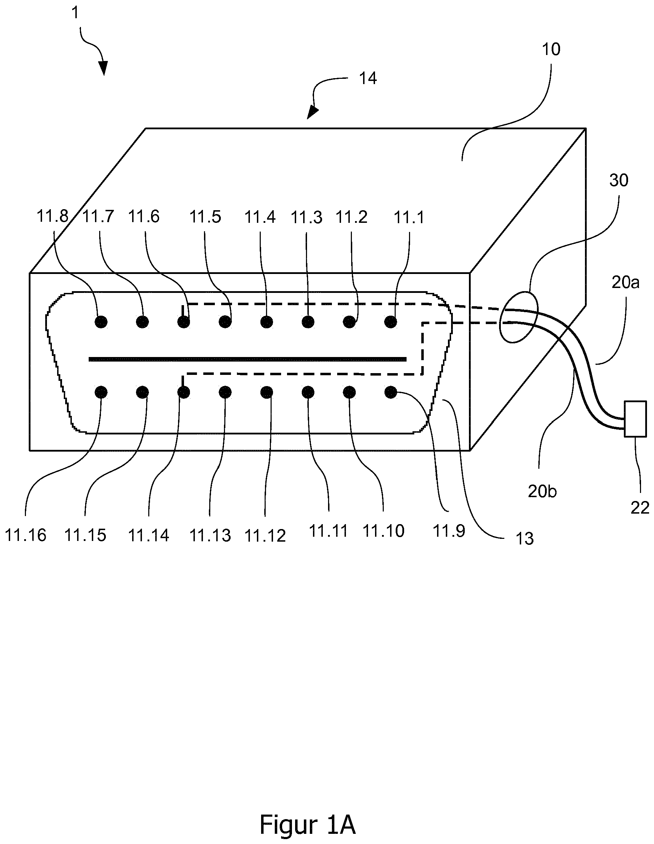

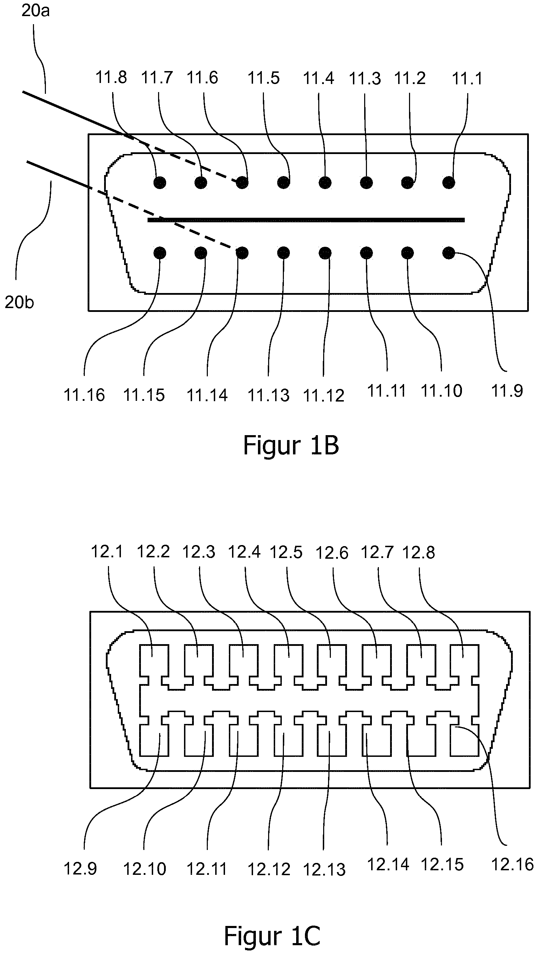

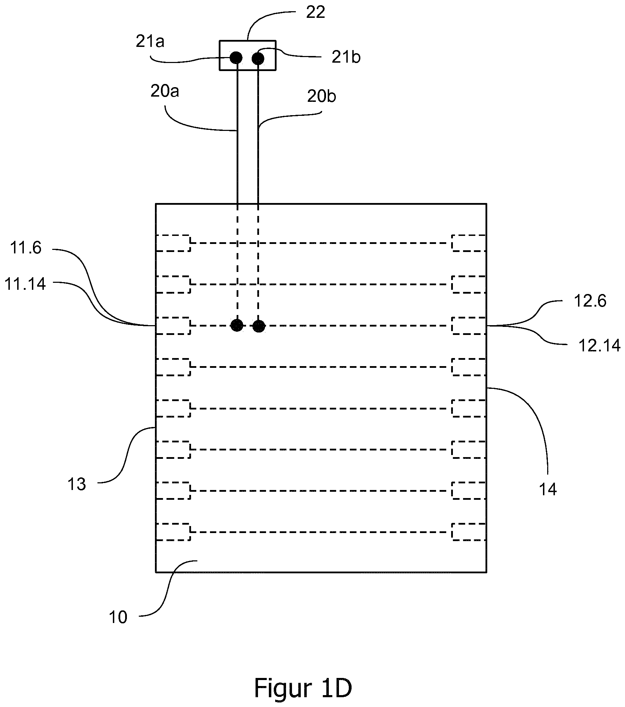

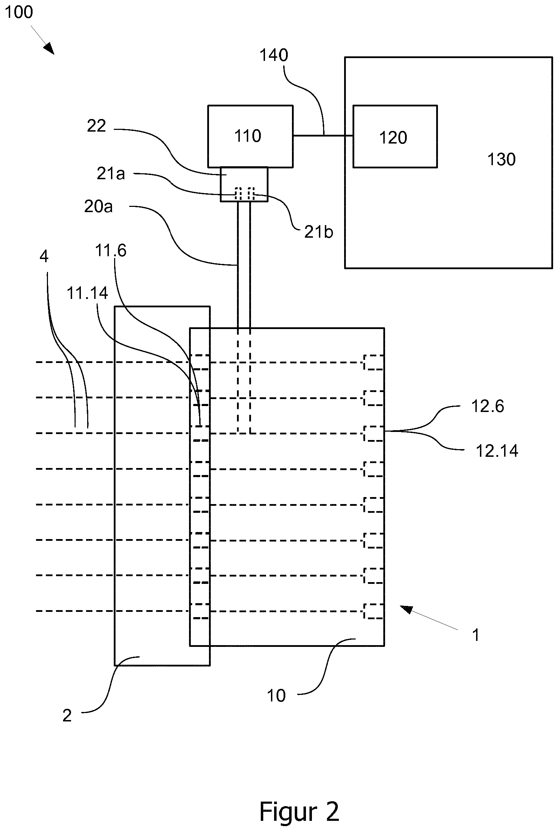

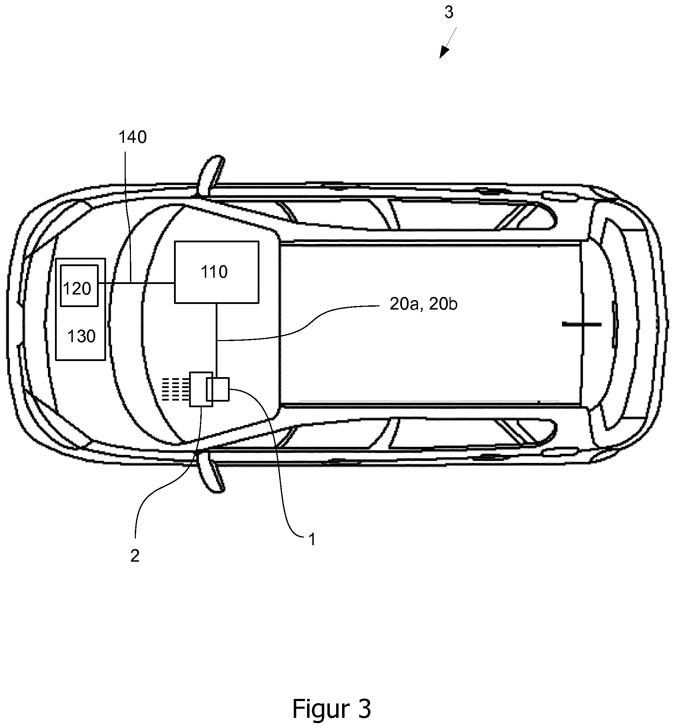

Die Figuren 1A bis 1D zeigen einen Steckeraufsatz 1 eines erfindungsgemäßen Systems 100 in verschiedenen Ansichten, wobei in Figur 1A eine Ansicht der Aufsteckseite 13 als eine Vorderseite und in Figur 1B eine Ansicht der Anschlussseite 14 als eine Rückseite abgebildet sind. Der Steckeraufsatz 1 weist einen Steckerkörper 10 auf, der hier eine quaderförmige Grundform hat. Die Aufsteckseite 13 ist hier als ein männlicher Steckanschluss mit stiftförmigen ersten Kontakten 11.1 bis 11.16 ausgeführt, während die Anschlussseite 14 als ein weiblicher Steckanschluss mit einer Steckerbuchse ausgebildet ist, in denen zweite Kontakte 12.1 bis 12.16 angeordnet sind. Es könnte aber auch umgekehrt die Aufsteckseite 13 als ein weiblicher und die Anschlussseite 14 als ein männlicher Steckanschluss ausgebildet sein. Alternativ könnte die Aufsteckseite 13 und die Anschlussseite 14 jeweils gleich ausgebildet sein, so dass der Steckerkörper 1 die Funktion eines Invertieradapters (Gender Changer) hat. Die Aufsteckseite 13 und die Anschlussseite 14 sind hier jeweils als 16-polige Steckverbinder mit jeweils sechzehn ersten bzw. zweiten elektrischen Kontakten 11.1 bis 1.16 bzw. 12.1 bis 12.16 ausgeführt. Aus Figur 1D wird deutlich, dass jeder erste Kontakt 11.1 bis 11.16 mit einem jeweils zugeordneten zweiten Kontakt 12.1 bis 12.16 innerhalb Steckerkörpers 10 elektrisch verbunden ist, wobei erste und zweite Kontakte an einem gemeinsamen, insbesondere metallischen, Kontaktelement oder an separaten, beispielsweise über Verbindungskabelsegmente miteinander verbundenen, Kontaktelementen vorgesehen sein können. Hier ist die Aufsteckseite 13 und die Anschlussseite 14 jeweils als ein genormter 16-poliger OBD-2-Steckanschluss ausgebildet, wobei die Anschlussseite 14 ein weibliches Gegenstück zu der männlichen Aufsteckseite 13 bildet. Dies hat den Vorteil, dass der Steckeraufsatz 1 an einen Diagnoseanschluss 2 eines Fahrzeugs 3 anschließbar, insbesondere aufsteckbar, ist, der typischerweise standardgemäß als eine genormte weibliche OBD-2-Steckbuchse in Fahrzeugen vorhanden ist (siehe Figuren 2 und 3). Typischerweise ist der OBD-Anschluss in Fahrzeugen, insbesondere Kraftfahrzeugen, hinter einer Verkleidung am Armaturenbrett oder im unteren Bereich des Fahrzeugsitzes versteckt. Vorzugsweise ist der Steckeraufsatz 1 möglichst flach ausgeführt, so dass eine Verkleidung auch noch über den Steckeraufsatz 1 passt, wenn dieser auf den Diagnoseanschluss 2 aufgesteckt ist. Erfindungsgemäß wird der Steckeraufsatz 1 beim Nachrüsten einer Klimaeinrichtung 130 (siehe Figur 3) auf den Diagnoseanschluss 2 aufgesteckt und verbleibt dort dauerhaft während des Betriebs des Fahrzeugs 3.

In der in den Figuren 1A bis 1D gezeigten Ausführungsform des Steckeraufsatzes 1 sind durch eine seitlich am Steckerkörper 10 angeordnete Abzweigungsöffnung 30 zwei Abzweigungsleitungen 20a, 20b aus dem Steckerkörper 10 herausgeführt. Die Abzweigungsleitungen 20a, 20b sind als Datenbusleitungen ausgebildet, die jeweils mit einem bestimmten ersten Kontakt innerhalb des Steckerkörpers 10 verbunden sind, wobei eine Abzweigungsleitung 20a, 20b jeweils von einer ausgewählten elektrisch leitenden Verbindung zwischen einem bestimmten ersten und einem zugeordneten zweiten Kontakt abgezweigt. Die an den Abzweigungsleitungen 20a und 20b endseitig ausgebildeten Anschlusskontakte 21a bzw. 21b sind in einem gemeinsamen Abzweigungssteckverbinder 22 angeordnet. Mithilfe des Steckeraufsatzes 1 mit den Abzweigungsleitungen 20a, 20b können innerhalb eines Fahrzeugs 3 vorhandene Fahrzeugdaten über den Diagnoseanschluss 2 ausgelesen und zur Verwendung an einer anderen Stelle im Fahrzeug 3 weitergeleitet werden. Die Anzahl und Verbindung der Abzweigungsleitungen mit ersten Kontakten 11.1 bis 11.16 ist so gewählt, dass der Zugriff auf die relevanten Steckanschlüsse des Diagnoseanschlusses 2 gewährleistet ist, also insbesondere so, dass diejenigen Leitungen des Diagnoseanschlusses 2 abgezweigt werden, über die die gewünschten Fahrzeugdaten fahrzeugintern kommuniziert werden. Dadurch, dass alle ersten und zweiten Kontakte 11.1 bis 11.16 bzw. 12.1 bis 12.16 jeweils elektrisch miteinander verbunden sind und die Anschlussseite 14 den Diagnoseanschluss 2 nachgebildet ist, bleibt die volle ursprüngliche Funktionalität des Diagnoseanschlusses 2 erhalten, so dass auch bei aufgestecktem Steckeraufsatz 1 ein Diagnosegerät an den Diagnoseanschluss 2 angeschlossen werden kann, um in einer Werkstatt eine Fehlerdiagnose für das Fahrzeug 3 durchzuführen.

In den vorliegenden Ausführungsbeispielen gemäß den Figuren 1A bis 1D, 2 und 3, die auf einem OBD-2-Steckanschluss als Diagnoseanschluss 2 basieren, ist die Abzweigungsleitung 20a mit dem ersten Kontakt 11.6 verbunden, der standardgemäß dem Pin Nr. 6 eines OBD-2-Steckers entspricht, der mit der Leitung CAN High eines CAN-Bussystems belegt ist. Die Abzweigungsleitung 20b ist mit dem ersten Kontakt 11.14 verbunden, der standardgemäß dem Pin Nr. 14 eines OBD-2-Steckers entspricht, der mit der Leitung CAN Low eines CAN-Bussystems belegt ist. Ein fahrzeuginterner Fahrzeugbus 4, auf dem Fahrzeugdaten kommuniziert werden, ist hier als ein CAN-Bussystem ausgebildet, dessen Datenbusleitungen an den OBD-2 Diagnoseanschluss 2 des Fahrzeugs 3 angeschlossen sind. Auf dem CAN-Bussystem fahrzeugintern kommunizierte Fahrzeugdaten können auf diese Weise über den Steckeraufsatz 1 aus dem Diagnoseanschluss 2 ausgelesen werden, insbesondere über eine standardgemäße OBD-2 PID (Parameter ID), über die z.B. die Gatewayeinrichtung 110 Fahrzeugdaten von einem fahrzeuginternen Steuergerät oder Sensor abfragt.

In Figur 2 ist ein erfindungsgemäßes System 100 auf Fahrzeugdaten über den Diagnoseanschluss 2 des Fahrzeugs 3 schematisch dargestellt. Der Steckeraufsatz 1 ist auf die standardmäßig als Diagnoseanschluss 2 vorgesehene OBD-2-Buchse aufgesteckt. Die Abzweigungsleitungen 20a, 20b sind über den Abzweigungssteckverbinder 22 mit einer Gatewayeinrichtung 110 verbunden. Die Gatewayeinrichtung 110 ist über einen Datenbus 140 mit einem Steuergerät 120 einer Klimaeinrichtung 130, insbesondere eines Heizgeräts, verbunden und dazu ausgebildet, basierend auf über den Diagnoseanschluss 2 ausgelesenen Fahrzeugdaten Steuerbefehle zur Steuerung der Klimaeinrichtung 130, insbesondere eines Heizgeräts, zu erzeugen. An die Gatewayeinrichtung 110 können zusätzliche Fahrzeugdaten, insbesondere Sensordaten, beispielsweise eine über einen Temperatursensor erfasste Außentemperatur, über weitere an die Gatewayeinrichtung 110 angeschlossene Bussysteme, zum Beispiel einen LIN-Bus oder einen beliebigen anderen Bus, übermittelt werden, die zur Erzeugung von Steuerbefehlen ebenfalls berücksichtigt werden können. Das erfindungsgemäße

System 100 eignet sich insbesondere zur Nachrüstung einer Klimaeinrichtung 130 in einem Fahrzeug 3. Über den Steckeraufsatz 1 können Fahrzeugdaten, wie beispielsweise eine Motordrehzahl, eine Kühlmitteltemperatur und/oder Zustandsdaten betreffend eine Stopp-Start-Funktion der Motorsteuerung, über den Diagnoseanschluss 2 des Fahrzeugs ausgelesen werden, ohne in bestehende Kommunikationssysteme des Fahrzeugs 3, z.B. fahrzeuginterne Bussysteme oder Kabelbäume, eingreifen bzw. diese modifizieren zu müssen.

In Figur 3 ist ein Fahrzeug 3 mit einer nachgerüsteten Klimaeinrichtung 130, wie einer Standheizung oder einem Zuheizer, gezeigt, wobei ein erfindungsgemäßes System 100 in den Fahrzeug 3 installiert ist.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Abänderungen hiervon sind dem Fachmann geläufig. Insbesondere ist es dem Fachmann geläufig, die einzelnen Ausführungsbeispiele in beliebiger Form zu kombinieren.

### Bezugszeichenliste

- 1: Steckeraufsatz
- 2: Diagnoseanschluss
- 3: Fahrzeug
- 4: Fahrzeugbus
- 10: Steckerkörper
- 11.1 bis 11.16: erste Kontakte
- 12.1 bis 12.16: zweite Kontakte
- 13: Aufsteckseite
- 14: Anschlussseite
- 20a, 20b: Abzweigungsleitung
- 21a, 21b: Anschlusskontakt
- 22: Abzweigungssteckverbinder
- 30: Abzweigungsöffnung
- 100: System
- 110: Gatewayeinrichtung
- 120: Steuergerät
- 130: Klimaeinrichtung
- 140: Datenbus

## Patentansprüche

1. System (100) zum Auslesen von Fahrzeugdaten über einen Diagnoseanschluss, insbesondere OBD-Steckanschluss, eines Fahrzeugs, umfassend
- einen Steckeraufsatz (1) für einen Diagnoseanschluss eines Fahrzeugs und
- eine Gatewayeinrichtung (110) zur Kommunikation mit einer Klimaeinrichtung des Fahrzeugs, insbesondere einer Standheizung,
wobei der Steckeraufsatz (1), insbesondere OBD-Steckanschluss,
einen Steckerkörper (10), der eine Aufsteckseite (13) mit ersten Kontakten (11.1 bis 11.16) zur Verbindung mit dem Diagnoseanschluss und eine Anschlussseite (14) mit zweiten Kontakten (12.1 bis 12.16), insbesondere zur Verbindung mit einem Diagnosegerät, aufweist, und
mindestens eine Abzweigungsleitung (20a, 20b) umfasst,
wobei die Abzweigungsleitung (20a, 20b) von mindestens einem der ersten Kontakte (11.1 bis 11.16) aus dem Steckerkörper (10) herausführt und als eine bidirektionale Kommunikationsleitung ausgebildet ist, die mit der Gatewayeinrichtung (110) kommunikativ verbunden ist,
wobei
das System (100) außerdem ein Steuergerät (120) für eine Klimaeinrichtung des Fahrzeugs umfasst,
wobei die Gatewayeinrichtung (110) über einen Datenbus (140) mit dem Steuergerät (120) kommunikativ verbunden ist.

2. System (100) gemäß Anspruch 1,
**dadurch gekennzeichnet, dass**
mindestens ein erster Kontakt (11.1 bis 11.16) mit einem zugeordneten zweiten Kontakt (12.1 bis 12.16) elektrisch verbunden ist.

3. System (100) gemäß Anspruch 1 oder 2, insbesondere Anspruch 2,
**dadurch gekennzeichnet, dass**
eine Vielzahl der, vorzugsweise alle, ersten Kontakte (11.1 bis 11.16) mit einem jeweils zugeordneten zweiten Kontakt (12.1 bis 12.16) elektrisch verbunden sind.

4. System (100) gemäß einem der vorhergehenden Ansprüche,
**dadurch gekennzeichnet, dass**
die Aufsteckseite (13) und/oder die Anschlussseite (14) als ein OBD-2-Steckanschluss ausgebildet sind/ist.

5. System (100) gemäß einem der vorhergehenden Ansprüche,
**dadurch gekennzeichnet, dass**
die Aufsteckseite (13) als ein männlicher OBD-Steckanschluss ausgebildet ist, insbesondere zur Verbindung mit einer weiblichen OBD-Buchse eines Fahrzeugs und/oder die Anschlussseite (14) als ein weiblicher OBD-Steckanschluss ausgebildet ist.

6. System (100) gemäß einem der vorhergehenden Ansprüche,
**dadurch gekennzeichnet, dass** die mindestens eine Abzweigungsleitung (20a, 20b) als eine Datenbusleitung oder eine K-Leitung ausgebildet ist.

7. System (100) gemäß einem der vorhergehenden Ansprüche,
**dadurch gekennzeichnet, dass**
der Steckerkörper (10) eine, vorzugsweise seitliche, Abzweigungsöffnung (30) aufweist, durch die hindurch die mindestens eine Abzweigungsleitung (20a, 20b) aus dem Steckerkörper (10) herausführt.

8. System (100) gemäß einem der vorhergehenden Ansprüche,
**dadurch gekennzeichnet, dass**
die Abzweigungsleitung (20a, 20b), vorzugsweise endseitig, mit einem Abzweigungssteckverbinder (22) verbunden ist, wobei insbesondere mehrere, vorzugsweise alle, Abzweigungsleitungen (20a, 20b) mit einem gemeinsamen Abzweigungssteckverbinder (22) verbunden sind.

9. System (100) gemäß einem der vorhergehenden Ansprüche,
**dadurch gekennzeichnet, dass**
der Steckerkörper (10) eine Höhe von weniger als 70 mm, vorzugsweise von weniger als 60 mm, weiter vorzugsweise von weniger als 50 mm, weiter vorzugsweise von weniger als 40 mm, weiter vorzugsweise von weniger als 30 mm, weiter vorzugsweise von weniger als 20 mm, weiter vorzugsweise von weniger als 10 mm, hat.

10. System (100) gemäß einem der vorhergehenden Ansprüche,
**dadurch gekennzeichnet, dass**
eine erste Abzweigungsleitung (20a) mit einem ersten Kontakt (11.6) verbunden ist, der im eingesteckten Zustand des Steckeraufsatzes (1) mit einer ersten Datenbusleitung eines Fahrzeugs, insbesondere dem Anschluss 6 eines OBD-2 Steckanschlusses, in Kontakt ist, und
eine zweite Abzweigungsleitung (20b) mit einem ersten Kontakt (11.14) verbunden ist, der im eingesteckten Zustand des Steckeraufsatzes (1) mit einer zweiten Datenbusleitung eines Fahrzeugs, insbesondere dem Anschluss 14 eines OBD-2 Steckanschlusses, in Kontakt ist.

11. System (100) gemäß einem der vorhergehenden Ansprüche,
**dadurch gekennzeichnet, dass**
die Gatewayeinrichtung (110) eine Datenspeichereinrichtung umfasst, die dazu ausgebildet ist, über den Diagnoseanschluss ausgelesene Fahrzeugdaten, insbesondere deren zeitlichen Verlauf, aufzuzeichnen, vorzugsweise um die Fahrzeugdaten zu einem späteren Zeitpunkt bereitzustellen.

12. Fahrzeug (3) umfassend ein System (100) gemäß einem der Ansprüche 1 bis 11.

13. Verfahren zum Nachrüsten einer Klimaeinrichtung (130), insbesondere einer Standheizung, bei einem Fahrzeug (3), umfassend die folgenden Schritte:
- Installieren der Komponenten der Klimaeinrichtung (130) einschließlich eines Steuergeräts (120) in dem Fahrzeug (3);
- Montieren einer Gatewayeinrichtung (110) in dem Fahrzeug (3) für die Kommunikation mit der Klimaeinrichtung (130);
- Verbinden eines Diagnoseanschlusses (2), insbesondere OBD-Steckanschlusses, des Fahrzeugs (3) mit der Klimaeinrichtung (130) durch ein Aufstecken eines Steckeraufsatzes (1), der einen Steckerkörper (10) mit einer Aufsteckseite (13) mit ersten Kontakten (11.1 bis 11.16) zur Verbindung mit dem Diagnoseanschluss aufweist, mit einer Abzweigungsleitung (20a, 20b) auf den Diagnoseanschluss (2), wobei die Abzweigungsleitung (20a, 20b) von mindestens einem der ersten Kontakte (11.1 bis 11.16) aus dem Steckerkörper (10) herausführt und als eine bidirektionale Kommunikationsleitung ausgebildet ist, die mit der Gatewayeinrichtung (110) kommunikativ verbunden wird,
- wobei die Gatewayeinrichtung (110) über einen Datenbus (140) mit dem Steuergerät (120) kommunikativ verbunden wird.

14. Verfahren gemäß Anspruch 13,
**gekennzeichnet durch**
- Verbinden des Diagnoseanschlusses (2) mit der Gatewayeinrichtung (110) in einem ersten Verbindungsschritt, insbesondere mittels der Abzweigungsleitung (20a, 20b) eines auf den des Diagnoseanschluss (2) aufgesteckten Steckeraufsatzes (1),
- Verbinden der Gatewayeinrichtung (110) mit der Klimaeinrichtung (130), insbesondere mit einem Steuergerät (120) der Klimaeinrichtung (130), über einen Datenbus (140) in einem zweiten Verbindungsschritt.

## Claims

1. System (100) for reading out vehicle data via a diagnostic connection, in particular an OBD plug-in connection, of a vehicle, comprising:
- a plug attachment (1) for a diagnostic connection of a vehicle; and
- a gateway device (110) for communication with an air-conditioning device of the vehicle, in particular an auxiliary heating system,
wherein the plug attachment (1), in particular the OBD plug-in connection, comprises:
a plug body (10) which has a plug-on side (13) with first contacts (11.1 to 11.16) for connection to the diagnostic connection and a connection side (14) with second contacts (12.1 to 12.16), in particular for connection to a diagnostic device; and
at least one branch line (20a, 20b),
wherein the branch line (20a, 20b) leads out of the plug body (10) from at least one of the first contacts (11.1 to 11.16) and is designed as a bidirectional communication line which is communicatively connected to the gateway device (110),
wherein
the system (100) also comprises a control device (120) for an air-conditioning device of the vehicle,
wherein the gateway device (110) is communicatively connected to the control device (120) via a data bus (140).

2. System (100) according to Claim 1,
**characterized in that**
at least one first contact (11.1 to 11.16) is electrically connected to an associated second contact (12.1 to 12.16).

3. System (100) according to Claim 1 or 2, in particular Claim 2,
**characterized in that**
a plurality of, preferably all, of the first contacts (11.1 to 11.16) are electrically connected to a respectively associated second contact (12.1 to 12.16).

4. System (100) according to one of the preceding claims,
**characterized in that**
the plug-on side (13) and/or the connection side (14) are/is designed as an OBD-2 plug connection.

5. System (100) according to one of the preceding claims,
**characterized in that**
the plug-on side (13) is designed as a male OBD plug connection, in particular for connection to a female OBD socket of a vehicle, and/or the connection side (14) is designed as a female OBD plug connection.

6. System (100) according to one of the preceding claims,
**characterized in that**
the at least one branch line (20a, 20b) is designed as a data bus line or a K-line.

7. System (100) according to one of the preceding claims,
**characterized in that**
the plug body (10) has a, preferably lateral, branch opening (30) through which the at least one branch line (20a, 20b) leads out of the plug body (10).

8. System (100) according to one of the preceding claims,
**characterized in that**
the branch line (20a, 20b) is connected, preferably at the end, to a branch plug-in connector (22), wherein in particular a plurality of, preferably all, of the branch lines (20a, 20b) are connected to a common branch plug-in connector (22).

9. System (100) according to one of the preceding claims,
**characterized in that**
the plug body (10) has a height of less than 70 mm, preferably of less than 60 mm, further preferably of less than 50 mm, further preferably of less than 40 mm, further preferably of less than 30 mm, further preferably of less than 20 mm, further preferably of less than 10 mm.

10. System (100) according to one of the preceding claims,
**characterized in that**
a first branch line (20a) is connected to a first contact (11.6) which, in the plugged-in state of the plug attachment (1), is in contact with a first data bus line of a vehicle, in particular the connection 6 of an OBD-2 plug-in connection; and
a second branch line (20b) is connected to a first contact (11.14) which, in the plugged-in state of the plug attachment (1), is in contact with a second data bus line of a vehicle, in particular the connection 14 of an OBD-2 plug-in connection.

11. System (100) according to one of the preceding claims,
**characterized in that**
the gateway device (110) comprises a data storage device which is designed to record vehicle data read out via the diagnostic connection, in particular the temporal profile thereof, preferably in order to provide the vehicle data at a later time.

12. Vehicle (3) comprising a system (100) according to one of Claims 1 to 11.

13. Method for retrofitting an air-conditioning device (130), in particular an auxiliary heating system, in a vehicle (3), comprising the following steps:
- installing the components of the air-conditioning device (130) including a control device (120) in the vehicle (3);
- mounting a gateway device (110) in the vehicle (3) for communication with the air-conditioning device (130);
- connecting a diagnostic connection (2), in particular an OBD plug-in connection, of the vehicle (3) to the air-conditioning device (130) by plugging on a plug attachment (1) which has a plug body (10) with a plug-on side (13) with first contacts (11.1 to 11.16) for connection to the diagnostic connection, with a branch line (20a, 20b) to the diagnostic connection (2), wherein the branch line (20a, 20b) leads out of the plug body (10) from at least one of the first contacts (11.1 to 11.16) and is designed as a bidirectional communication line which is communicatively connected to the gateway device (110),
- wherein the gateway device (110) is communicatively connected to the control device (120) via a data bus (140).

14. Method according to Claim 13,
**characterized by**
- connecting the diagnostic connection (2) to the gateway device (110) in a first connection step, in particular by means of the branch line (20a, 20b) of a plug attachment (1) which is plugged onto the diagnostic connection (2),
- connecting the gateway device (110) to the air-conditioning device (130), in particular to a control device (120) of the air-conditioning device (130), via a data bus (140) in a second connection step.

## Revendications

1. Système (100) destiné à lire des données de véhicule par le biais d'un raccord de diagnostic, en particulier d'un raccord enfichable OBD, d'un véhicule, ledit système comprenant
- un embout de connecteur enfichable (1) destiné à un raccord de diagnostic d'un véhicule et
- un dispositif formant passerelle (110) destiné à la communication avec un système de climatisation du véhicule, notamment un chauffage d'appoint,
l'embout de connecteur enfichable (1), en particulier le raccord enfichable OBD, comprenant un corps de connecteur enfichable (10) qui comporte un côté enfichable (13) pourvu de premiers contacts (11.1 à 11.16) destinés à la liaison au raccord de diagnostic et un côté raccord (14) pourvu de deuxièmes contacts (12.1 à 12.16), destinés notamment à la liaison à une unité de diagnostic, et
au moins une ligne de dérivation (20a, 20b),
la ligne de dérivation (20a, 20b) d'au moins un des premiers contacts (11.1 à 11.16) sortant du corps de connecteur enfichable (10) et étant conçue comme une ligne de communication bidirectionnelle qui est reliée de manière communicative au dispositif formant passerelle (110),
le système (100) comprenant également une unité de commande (120) destinée à un dispositif de climatisation du véhicule,
le dispositif formant passerelle (110) étant relié de manière communicative à l'unité de commande (120) par le biais d'un bus de données (140).

2. Système (100) selon la revendication 1,
**caractérisé en ce que**
au moins un premier contact (11.1 à 11.16) est relié électriquement à un deuxième contact (12.1 à 12.16).

3. Système (100) selon la revendication 1 ou 2, notamment la revendication 2,
**caractérisé en ce que**
un grand nombre de premiers contacts (11.1 à 11.16), de préférence tous, sont reliés électriquement à un deuxième contact (12.1 à 12.16) qui leur est associé.

4. Système (100) selon l'une des revendications précédentes,
**caractérisé en ce que**
le côté enfichable (13) et/ou le côté raccord (14) sont réalisés sous forme de raccord enfichable OBD-2.

5. Système (100) selon l'une des revendications précédentes,
**caractérisé en ce que**
le côté enfichable (13) est conçu comme un raccord enfichable OBD mâle, destiné en particulier à la liaison à une douille OBD femelle d'un véhicule et/ou le côté raccord (14) est conçu comme un raccord enfichable OBD femelle.

6. Système (100) selon l'une des revendications précédentes,
**caractérisé en ce que**
l'au moins une ligne de dérivation (20a, 20b) est conçue comme une ligne de bus de données ou une ligne K.

7. Système (100) selon l'une des revendications précédentes,
**caractérisé en ce que**
le corps de connecteur enfichable (10) comporte une ouverture de dérivation (30), de préférence latérale, par laquelle l'au moins une ligne de dérivation (20a, 20b) sort du corps de connecteur enfichable (10).

8. Système (100) selon l'une des revendications précédentes,
**caractérisé en ce que**
la ligne de dérivation (20a, 20b) est reliée, de préférence du côté extrémité, à un connecteur de dérivation enfichable (22), en particulier plusieurs lignes de dérivation (20a, 20b), de préférence toutes, étant reliées à un connecteur de dérivation enfichable commun (22).

9. Système (100) selon l'une des revendications précédentes,
**caractérisé en ce que**
le corps de connecteur enfichable (10) a une hauteur inférieure à 70 mm, de préférence inférieure à 60 mm, plus préférablement inférieure à 50 mm, plus préférablement inférieure à 40 mm, plus préférablement inférieure à 30 mm, plus préférablement inférieure à 20 mm, plus préférablement inférieure à 10 mm.

10. Système (100) selon l'une des revendications précédentes,
**caractérisé en ce que**
une première ligne de dérivation (20a) est reliée à un premier contact (11.6) qui est en contact avec une première ligne de bus de données d'un véhicule, en particulier le raccord 6 d'un raccord OBD-2 enfichable, lorsque l'embout de connecteur (1) est enfiché, et
une deuxième ligne de dérivation (20b) est reliée à un premier contact (11.14) qui est en contact avec une deuxième ligne de bus de données d'un véhicule, en particulier le raccord 14 d'un raccord OBD-2 enfichable, lorsque l'embout de connecteur (1) est enfiché.

11. Système (100) selon l'une des revendications précédentes,
**caractérisé en ce que**
le dispositif formant passerelle (110) comprend un dispositif de mémorisation de données qui est conçu pour enregistrer des données de véhicule lues par le biais du raccord de diagnostic, en particulier leur variation dans le temps, de préférence afin de fournir les données de véhicule ultérieurement.

12. Véhicule (3) comprenant un système (100) selon l'une des revendications 1 à 11.

13. Procédé de post-équipement d'un dispositif de climatisation (130), notamment d'un chauffage d'appoint, dans un véhicule (3), ledit procédé comprenant les étapes suivantes :
- installer les composants du dispositif de climatisation (130) incluant une unité de commande (120) dans le véhicule (3) ;
- monter un dispositif formant passerelle (110) dans le véhicule (3) pour la communication avec le dispositif de climatisation (130) ;
- relier un raccord de diagnostic (2), en particulier un raccord OBD enfichable, du véhicule (3) au dispositif de climatisation (130) par enfichage d'un embout de connecteur enfichable (1) qui comporte un corps de connecteur enfichable (10) comportant un côté enfichable (13) pourvu de premiers contacts (11.1 à 11.16) destinés à la liaison au raccord de diagnostic, avec une ligne de dérivation (20a, 20b) sur le raccord de diagnostic (2), la ligne de dérivation (20a, 20b) d'au moins un des premiers contacts (11.1 à 11.16) sortant du corps de connecteur enfichable (10) et étant conçue comme une ligne de communication bidirectionnelle qui est reliée de manière communicative au dispositif formant passerelle (110),
- le dispositif formant passerelle (110) étant relié de manière communicative à l'unité de commande (120) par le biais d'un bus de données (140).

14. Procédé selon la revendication 13,
**caractérisé par** les étapes suivantes
- relier le raccord de diagnostic (2) au dispositif formant passerelle (110) dans une première étape de liaison, notamment au moyen de la ligne de dérivation (20a, 20b) d'un embout de connecteur enfichable (1) enfiché sur le raccord de diagnostic (2),
- relier le dispositif formant passerelle (110) au dispositif de climatisation (130), en particulier à une unité de commande (120) du dispositif de climatisation (130), par le biais d'un bus de données (140) dans une deuxième étape de liaison.
